# EUROPÄISCHE PATENTANMELDUNG

(11) **EP 4 349 764 A1**
(43) Veröffentlichungstag der Anmeldung: **10.04.2024**
(21) Anmeldenummer: 23196155.8
(22) Anmeldetag: 08.09.2023
(51) Int. Cl.: B66C 13/08, B66C 13/46, B66C 19/00, B60R 1/00

(54) **KRAN**

(30) Priorität: 07.10.2022 AT 1952022
(71) Anmelder: Hans Künz GmbH, 6971 Hard (Vbg.) (AT)
(72) Erfinder: Moosbrugger, David, 6867 Schwarzenberg (AT); Eberharter, Johannes Karl, 6971 Hard (AT); Fink, Lukas, 6714 Nüziders (AT)
(74) Vertreter: Torggler & Hofmann Patentanwälte - Rankweil

(57) **Zusammenfassung**

Kran (1) mit zumindest einem verfahrbaren Hauptträger (3) und einer an dem zumindest einen Hauptträger (3) verfahrbar gelagerten Laufkatze (5), wobei an der Laufkatze (5) ein Windenträger (6) befestigt ist und am Windenträger (6) eine, mittels Seilen (7) in vertikaler Richtung (8) auf und ab verfahrbare, Lastaufnahmevorrichtung (9) hängt, wobei die Lastaufnahmevorrichtung (9) Greifwerkzeuge (10, 11) zum lösbaren Greifen einer Last aufweist und der Kran (1) zumindest eine Kamera (14) und zumindest einen Steuerstand (15) für einen Kranfahrer aufweist und der Steuerstand (15) zumindest einen Bildschirm (17) aufweist, wobei auf dem zumindest einen Bildschirm (17) in die Wiedergabe des jeweils momentan von der Kamera (14) aufgenommenen Bildes (16) zusätzlich zumindest eine Hilfsgrafik (18) als Hilfsmittel für den Kranfahrer zum Ausrichten der Lastaufnahmevorrichtung (9) und/oder des Greifwerkzeugs (10, 11) der Lastaufnahmevorrichtung (9) relativ zur zu greifenden Last einblendbar ist.

## Beschreibung

Die vorliegende Erfindung betrifft einen Kran mit zumindest einem, entlang einer ersten Richtung hin und her verfahrbaren Hauptträger und einer an dem zumindest einen Hauptträger entlang einer zweiten Richtung hin und her verfahrbar gelagerten Laufkatze, wobei die erste Richtung und die zweite Richtung orthogonal zueinander ausgerichtet sind und an der Laufkatze ein Windenträger, insbesondere drehbar, befestigt ist und am Windenträger eine, mittels Seilen in vertikaler Richtung auf und ab verfahrbare, Lastaufnahmevorrichtung hängt, wobei die Lastaufnahmevorrichtung Greifwerkzeuge zum lösbaren Greifen einer Last, insbesondere eines Sattelaufliegers und/oder eines Containers, aufweist und der Kran zumindest eine Kamera und zumindest einen Steuerstand für einen Kranfahrer zum Verfahren des zumindest einen Hauptträgers, der Laufkatze und der Lastaufnahmevorrichtung sowie zum Bedienen der Greifwerkzeuge der Lastaufnahmevorrichtung aufweist und der Steuerstand zumindest einen Bildschirm zur Wiedergabe des jeweils momentan von der Kamera aufgenommenen Bildes aufweist.

Darüber hinaus betrifft die Erfindung auch ein Verfahren zum Betrieb eines Krans.

Kräne dieser Art können z.B. als Portalkran oder auch als Brückenkran ausgebildet werden. Die WO 2019/118992 zeigt Portalkräne. Diese Kräne werden zum Verladen von Lasten wie Sattelaufliegern und/oder Containern eingesetzt und von einem Kranführer mittels eines Steuerstandes gesteuert. Es ist in der Praxis bekannt, solche Kräne mit Kameras auszurüsten, um dem Kranfahrer das Ausrichten der Lastaufnahmevorrichtung und/oder der Greifwerkzeuge beim Auf- und/oder Abladen zu vereinfachen. Oft ist beim Stand der Technik aber nach wie vor zusätzliches Hilfspersonal notwendig, um den Kranfahrer einzuweisen.

Aufgabe der Erfindung ist es, eine Verbesserung vorzuschlagen, die den Kranfahrer noch besser dabei unterstützt, die Lastaufnahmevorrichtung und/oder ihre Greifwerkzeuge zum Aufnehmen oder Abladen der Last, insbesondere von Sattelaufliegern und/oder Containern, optimal auszurichten.

Hierfür schlägt die Erfindung für Kräne der eingangs genannten Art vor, dass auf dem zumindest einen Bildschirm in die Wiedergabe des jeweils momentan von der Kamera aufgenommenen Bildes zusätzlich zumindest eine Hilfsgrafik als Hilfsmittel für den Kranfahrer zum Ausrichten der Lastaufnahmevorrichtung und/oder des Greifwerkzeugs der Lastaufnahmevorrichtung relativ zur zu greifenden Last einblendbar ist.

Vereinfacht gesprochen, sieht die Erfindung somit vor, dass zumindest eine Hilfsgrafik als Zielhilfe in das Bild der Kamera eingeblendet wird, um so den Kranfahrer beim Ausrichten der Lastaufnahmevorrichtung und/oder des Greifwerkzeugs der Lastaufnahmevorrichtung noch besser zu unterstützen. Hierdurch kann in günstigen Ausgestaltungsformen der Erfindung sogar auf Hilfspersonal zum Einweisen des Kranführers verzichtet werden.

Das erfindungsgemäße Verfahren zum Betrieb eines erfindungsgemäßen Krans sieht entsprechend vor, dass auf dem Bildschirm in die Wiedergabe des jeweils momentan von der Kamera aufgenommenen Bildes zusätzlich zumindest eine Hilfsgrafik als Hilfsmittel für den Kranfahrer zum Ausrichten der Lastaufnahmevorrichtung und/oder des Greifwerkzeugs der Lastaufnahmevorrichtung relativ zur zu greifenden Last, vorzugsweise zum zu greifenden Sattelauflieger und/oder Container, eingeblendet wird.

Aus den nachfolgend genannten Merkmalen bevorzugter Varianten erfindungsgemäßer Kräne ergeben sich entsprechend auch bevorzugte Ausgestaltungsformen des erfindungsgemäßen Verfahrens.

Die Kameras nehmen bei der Erfindung in der Regel eine zeitliche Abfolge von Bildern auf. Je nach Geschwindigkeit der Aufnahme und der Wiedergabe stellt sich diese Abfolge der Bilder noch als eine Abfolge von einzeln erkennbaren Bildern oder als Film für den Kranfahrer dar.

Die Erfindung kann zum Verladen von verschiedenen Lasten, insbesondere sowohl von Containern als auch von Sattelaufliegern, eingesetzt werden. Bei Containern handelt es sich allgemein um Behälter, welche z.B. auf an sich bekannten Tiefladern mittels LKW, Zugmaschine, Terminal Traktor und dergleichen oder auf Eisenbahnanhängern aber auch per Schiff transportiert werden können. Bevorzugt handelt es sich bei den Containern um sogenannte ISO-Container oder Schiffscontainer. Sattelauflieger hingegen haben eigene Räder, sodass sie direkt an einen LKW angehängt werden können. Erfindungsgemäße Kräne können aber gerade auch dazu verwendet werden, solche Sattelauflieger auf Schiffe und/oder Eisenbahnanhänger zu verladen.

Die Lastaufnahmevorrichtungen werden häufig auch als Spreader bezeichnet. Sie können auch bei der Erfindung verschiedene Arten von Greifwerkzeugen zum Greifen der Last, insbesondere der Sattelauflieger und/oder Container, aufweisen. Z.B. kann die Lastaufnahmevorrichtung als Greifwerkzeuge schwenkbar gelagerte Zangenarme zum Greifen eines Sattelaufliegers aufweisen. In einem solchen Fall kann an zumindest einem der Zangenarme die zumindest eine Kamera auch horizontal zur Seite blickend angeordnet sein. Besonders bevorzugt ist in diesem Zusammenhang vorgesehen, dass die Kamera in einem unteren Endbereich des Zangenarms im Bereich eines Zangenfußes des Zangenarms angeordnet ist. Zusätzlich und/oder anstelle dessen können die Lastaufnahmevorrichtungen von erfindungsgemäßen Kränen aber auch Verriegelungszapfen, welche auch als Twistlock bezeichnet werden, als Greifwerkzeuge aufweisen, um mit diesen in entsprechende Eckbeschläge, welche auch als Corner Casts bezeichnet werden, von Containern einzugreifen. Um die Lage der Verriegelungszapfen relativ zueinander an verschieden lange Containertypen anpassen zu können, kann die Lastaufnahmevorrichtung teleskopartig ausgebildet sein. Sie kann z.B. Greiferträger aufweisen, an denen sich die Verriegelungszapfen befinden, wobei die Greiferträger mittels Teleskopen in die Lastaufnahmevorrichtung eingefahren und aus dieser ausgefahren werden können, um verschieden lange Container zu transportieren. In bevorzugten Ausgestaltungsformen, bei denen sich die Kameras an der Lastaufnahmevorrichtung befinden, können die Kameras auch an den Greiferträgern, insbesondere in der Nähe der Verriegelungszapfen, angeordnet sein.

Die zumindest eine Kamera kann in bevorzugten Varianten am Windenträger oder an der Lastaufnahmevorrichtung angebracht und vertikal nach unten blickend ausgerichtet sein. Befindet sich die Kamera oder befinden sich die Kameras an der Lastaufnahmevorrichtung, so erfolgt das Ausrichten des Krans bzw. der Lastaufnahmevorrichtung relativ zur aufzunehmenden Last, vorzugsweise zum aufzunehmenden Sattelauflieger und/oder Container, günstigerweise in einem Betriebszustand, in dem sich die Lastaufnahmevorrichtung in einer vorab festlegbaren Ausgangshöhe z.B. in der maximal möglichen Höhe befindet.

In bevorzugten Ausgestaltungsformen ist der Windenträger drehbar an der Laufkatze gelagert bzw. aufgehängt. Der Begriff des Windenträgers ist allgemein zu verstehen. Es ist der Bereich des Krans, welcher an der Laufkatze befestigt ist und an dem die Seile auf- und/oder abwickelbar und/oder umlenkbar sind, an denen die Lastaufnahmevorrichtung hängt. Der Windenträger kann eine gebäudeartige, nach außen abgeschlossene Struktur haben und als Windenhaus bezeichnet werden. Der Windenträger kann aber auch als eine ganz oder teilweise offene Struktur und eben nicht gebäudeartig ausgeführt sein.

Der Steuerstand kann fix mit dem Windenträger verbunden und in erhöhter Position am Kran angeordnet sein. Im Rahmen der Erfindung sind aber z.B. auch mobile Steuerstände denkbar, welche der Kranfahrer dann z.B. auch mit sich herumtragen kann. Der Steuerstand kann z.B. aber auch ein in einem Gebäude vom Kran entfernt angeordneter Fernsteuerstand sein. In den Steuerstand ist jedenfalls der zumindest eine Bildschirm integriert, welcher die momentan von der zumindest einen Kamera aufgenommenen Bilder wiedergibt, wobei in diese Bilder eben erfindungsgemäß die zumindest eine Hilfsgrafik eingeblendet wird.

Bei der Hilfsgrafik kann es sich z.B. um zumindest eine Hilfslinie zum Ausrichten an einer Greifkante der zu greifenden Last, insbesondere des zu greifenden Sattelaufliegers und/oder Containers, handeln. Die Hilfsgrafik kann z.B. aber auch zumindest zwei orthogonal zueinander ausgerichtete Hilfslinien zum Ausrichten an einer Ecke der zu greifenden Last, insbesondere des zu greifenden Sattelaufliegers und/oder Containers, umfassen. Z.B. ist aber auch eine u-förmige Form der Hilfsgrafiken möglich.

Allgemein gesprochen, ist die Form der Hilfsgrafik günstigerweise an die Form der aufzunehmenden Last angepasst oder auch flexibel anpassbar. Die Lage, Ausrichtung und gegebenenfalls auch Größe und Form der Hilfsgrafik kann kalibrierbar ausgebildet sein. So kann vorgesehen sein, dass die Hilfsgrafik anhand von Kalibrierkörpern wie z.B. einem bestimmten Typ eines Containers oder Sattelaufliegers oder einem anderen Typ von Last oder der Lage und Form von speziellen Markierungen an der Last zunächst kalibriert wird, um so dann anschließend an diesen Typ von Last, insbesondere Sattelauflieger und/oder Container, und/oder Markierung speziell angepasst zu sein.

Es ist auch möglich, die Hilfsgrafiken nicht ständig sondern nur temporär einzublenden, insbesondere nur dann, wenn sie auch tatsächlich benötigt werden. Es kann z.B. vorgesehen sein, dass die Hilfsgrafik(en) situationsbedingt und/oder dynamisch ein- und ausblendbar ist bzw. sind, z.B. vom Kranführer und/oder automatisiert von einer Kransteuerung. Genausogut ist es möglich, mehrere verschiedene Hilfsgrafiken für verschiedene Lasttypen so zu hinterlegen, dass der Kranfahrer diejenige(n) Hilfsgrafik(en) auswählen und einblenden lassen kann, welche er für einen bestimmten Typ von Last gerade benötigt. Auch eine, z.B. von einer Kransteuerung, animierte also sich bewegende Ausgestaltung der Hilfsgrafiken ist möglich.

Zusätzlich zu den Hilfsgrafiken können in bevorzugten Ausgestaltungsformen der Erfindung auf dem zumindest einen Bildschirm auch noch Informationen und/oder Anzeigen anderer Assistenzsysteme angezeigt werden. So ist es z.B. denkbar Höheninformationen, Momentangeschwindigkeiten, Positionsinformationen und/oder auch Abstandsinformationen, z.B. vom Untergrund, verschiedener Bestandteile des erfindungsgemäßen Krans, wie z.B. des gesamten Krans und/oder der Laufkatze und/oder des Windenträgers und/oder der Lastaufnahmevorrichtung und/oder der Greifwerzeuge und/oder auch der Last, und dergleichen mit einzublenden. Auch hier sind animierte, also sich bewegende Darstellungen möglich. So können z.B. Zangenarme und/oder andere Greifwerkzeuge sich aufeinander zu und voneinander weg bewegend dargestellt werden.

Eine, beim Stand der Technik bereits an sich bekannte Technologie in Form einer sogenannten Micromotion kann auch bei erfindungsgemäßen Kränen realisiert werden. Es handelt sich dabei um eine Feinpositionierung der Lastaufnahmevorrichtung in horizontaler und vertikaler Richtung sowie bezüglich einer Ausrichtung der Last durch Kippen und/oder Verschwenken der Last.

Die Zahl und Positionierung der Kameras am Kran kann variieren. Besonders bevorzugte Varianten der Erfindung sehen vor, dass am Windenträger oder an der Lastaufnahmevorrichtung vier vertikal nach unten blickend ausgerichtete Kameras voneinander distanziert angebracht sind und die jeweils momentan aufgenommenen Bilder der vier Kameras in vier getrennten Sektoren nebeneinander auf dem Bildschirm zusammen mit jeweils zumindest einer eingeblendeten Hilfsgrafik wiedergebbar sind.

Allgemein gesprochen könnte man auch davon reden, dass am Windenträger oder an der Lastaufnahmevorrichtung mehrere vertikal nach unten blickend ausgerichtete Kameras voneinander distanziert angebracht sind und wobei bevorzugt die jeweils momentan aufgenommenen Bilder der Kameras in mehreren getrennten Sektoren nebeneinander auf dem Bildschirm zusammen mit jeweils zumindest einer eingeblendeten Hilfsgrafik wiedergebbar sind. Die Kameras können z.B. in Eckbereichen des Windenträgers und/oder der Lastaufnahmevorrichtung angeordnet sein.

Erfindungsgemäße Kräne können einen aber auch mehrere entlang der ersten Richtung hin und her verfahrbare Hauptträger aufweisen. Bei einem besonders bevorzugten erfindungsgemäßen Kran ist vorgesehen, dass er zwei, entlang der ersten Richtung hin und her verfahrbare Hauptträger aufweist, auf denen die Laufkatze entlang der zweiten Richtung hin und her verfahrbar gelagert ist.

Bei besonders bevorzugten Ausgestaltungsformen der Erfindung ist vorgesehen, dass der Kran ein Portalkran mit auf Rädern verfahrbaren Vertikalstützen ist, wobei der oder die Hauptträger auf den Vertikalstützen gelagert und zusammen mit den Vertikalstützen auf den Rädern entlang der ersten Richtung hin und her verfahrbar ist bzw. sind. Eine andere erfindungsgemäße Variante sieht vor, dass der Kran ein Brückenkran ist, wobei der oder die Hauptträger mittels Rädern entlang der ersten Richtung auf Führungsschienen hin und her verfahrbar ist bzw. sind.

Weitere Merkmale und Einzelheiten bevorzugter Ausgestaltungsformen der Erfindung werden nachfolgend exemplarisch anhand von Ausführungsbeispielen erläutert. Es zeigen:
- Fig. 1 bis 3: verschiedene Ansichten auf einen erfindungsgemäßen Kran, welcher als Portalkran ausgebildet ist;
- Fig. 4: eine schematische Darstellung zur Anordnung der Hauptträger, der Laufkatze, des Windenträgers und der Lastaufnahmevorrichtung des in den Fig. 1 bis 3 dargestellten Krans;
- Fig. 5: eine schematisierte Ansicht von unten auf den Windenträger und die Lastaufnahmevorrichtung des Krans aus den Fig. 1 bis 3;
- Fig. 6 bis 8: Darstellungen zu der bei diesem Kran zum Einsatz kommenden Lastaufnahmevorrichtung;
- Fig. 9: eine schematische Darstellung, wie mit vier am Windenträger dieses Krans angeordneten Kameras Bilder in vier getrennten, nebeneinander angeordneten Sektoren aufgenommen werden können;
- Fig. 10 bis 30: verschiedene Verladesituationen, bei denen das Einblenden von Hilfsgrafiken in die aufgenommenen Bilder erfindungsgemäß eingesetzt wird;
- Fig. 31: eine Darstellung zum Einsatz der als Zangenarme ausgebildeten Greifwerkzeugen mit den dort angeordneten Kameras;
- Fig. 32 und 33: zwei, verschiedenen Situationen gemäß Fig. 31 zugeordnete Bilder und
- Fig. 34: einen erfindungsgemäßen Kran, welcher als Brückenkran ausgebildet ist.

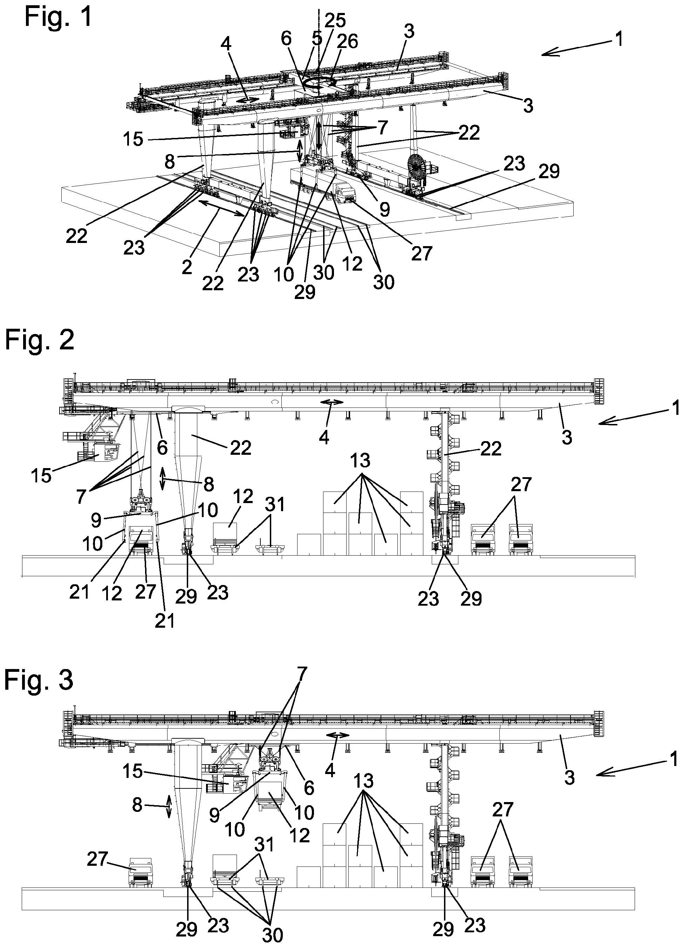

Fig. 1 zeigt eine perspektivische Ansicht von schräg oben auf einen erfindungsgemäßen, in diesem Ausführungsbeispiel als Portalkran ausgebildeten Kran 1. Neben einigen nicht erfindungswesentlichen, an sich bekannten Details, die hier nicht weiter erläutert werden, weist dieser Kran 1 vor allem erst einmal zwei Hauptträger 3 auf. Diese Hauptträger 3 sind auf Vertikalstützen 22 gelagert. An den unteren Enden der Vertikalstützen 22 befinden sich, wie an sich bekannt, Radsätze mit jeweils mehreren Rädern 23. Mittels der Räder 23 sind die Hauptträger 3 in der ersten Richtung 2 hin und her verfahrbar gelagert. Im gezeigten Ausführungsbeispiel handelt es sich um ein schienengelagertes System, bei dem die Räder 23 auf Kranschienen 29 verfahrbar aufliegen. Es ist aber genauso gut möglich, dass die Räder 23 z.B. eine entsprechende luft- oder gummigelagerte Bereifung aufweisen, mit denen sie einfach auf einem entsprechend ebenen Untergrund fahren können.

An den beiden Hauptträgern 3 ist eine Laufkatze 5 entlang der zweiten Richtung 4 hin und her verfahrbar gelagert. Die erste Richtung 2 und die zweite Richtung 4 sind orthogonal zueinander ausgerichtet. An der Laufkatze 5 ist, wie an sich bekannt, ein, in diesem Beispiel als Windenhaus ausgeführter, Windenträger 6, in diesem Ausführungsbeispiel drehbar, gelagert. Der Windenträger 6 kann um die Drehachse 25 in den einander entgegengesetzten Drehrichtungen 26 relativ zur Laufkatze 5 gedreht werden. Am Windenträger 6 hängt mittels Seilen 7 in an sich bekannter Art und Weise eine Lastaufnahmevorrichtung 9. Durch entsprechendes Auf- und Abwickeln dieser Seile 7 auf hier nicht explizit dargestellte Seiltrommeln kann die Lastaufnahmevorrichtung 9 in vertikaler Richtung 8 auf und ab verfahren werden. Die Lastaufnahmevorrichtung 9 weist verschiedene Greifwerkzeuge 10 und 11 zum lösbaren Greifen eines Sattelaufliegers 12 und/oder eines Containers 13 auf, wie sie weiter hinten noch im Detail erläutert werden. Weiters umfasst der erfindungsgemäße Kran 1 auch mehrere Kameras 14, deren Anordnung und Funktion weiter hinten ebenfalls noch im Detail erläutert wird. In diesem Ausführungsbeispiel ist der Steuerstand 15 des Krans fix mit dem Windenträger 6 verbunden. Der Steuerstand 15 umfasst all die Hilfsmittel, die der Kranfahrer zum Verfahren des zumindest einen Hauptträgers 3, der Laufkatze 5 und der Lastaufnahmevorrichtung 9, sowie zum Bedienen der Greifwerkzeuge 10 und 11 der Lastaufnahmevorrichtung 9 benötigt. Unter anderem umfasst der Steuerstand 15 auch zumindest einen Bildschirm 17 zur Wiedergabe des jeweils momentan von der jeweiligen Kamera 14 oder den Kameras aufgenommenen Bildes 16.

Wie eingangs bereits erläutert, muss der Steuerstand 15 natürlich nicht fix am Windenträger 6, wie in diesem Ausführungsbeispiel ausgeführt, realisiert sein. Es kann sich vielmehr auch um einen mobilen, insbesondere auch um einen vom Kranfahrer mobil tragbaren Steuerstand 15 handeln, was an sich zur Ansteuerung von Kränen heutzutage auch bekannt ist. Darüber hinaus kann der Steuerstand, wie bereits ausgeführt, z.B. aber auch ein in einem Gebäude vom Kran 1 entfernt angeordneter Fernsteuerstand sein.

Dargestellt ist in Fig. 1 auch ein LKW 27 mit einem Sattelauflieger 12, an dem in Fig. 1 gerade die als Zangenarme ausgebildeten Greifwerkzeuge 10 der Lastaufnahmevorrichtung 9 angreifen. Neben dem LKW 27 sind im Bereich zwischen den Kranschienen 29 in dem Ausführungsbeispiel gemäß der Fig. 1 auch Eisenbahnschienen 30 vorgesehen, auf denen entsprechende Eisenbahnanhänger 31 zum Verladen von Sattelaufliegern 12 und Containern 13 oder auch anderen Lasten bereitgestellt werden können.

In den Fig. 2 und 3 ist dieser Kran 1 aus Fig. 1 jeweils in einer Seitenansicht dargestellt. In den Fig. 2 und 3 sind im Bereich zwischen den Kranschienen 29 diverse Container 13 aufgestapelt. Auf den Eisenbahnschienen 30 befinden sich Eisenbahnanhänger 31, wobei auf einem dieser Eisenbahnanhänger 31 sich gerade ein Sattelauflieger 12 befindet, während der andere Eisenbahnanhänger 31 noch frei ist. In Fig. 2 ist die Situation dargestellt, bei der die Greifwerkzeuge 10 in Form der Zangenarme der Lastaufnahmevorrichtung 9 so auseinander geschwenkt sind, dass die Lastaufnahmevorrichtung 9 in vertikaler Richtung 8 weiter abgesenkt werden kann. Anschließend werden die Greifwerkzeuge in Form der Zangenarme 10 aufeinander zu geschwenkt, sodass die Zangenfüße 21 den Sattelauflieger 12 greifen. Fig. 3 zeigt, wie der Sattelauflieger 12 mittels der Lastaufnahmevorrichtung 9 bereits angehoben ist und über dem noch leeren Eisenbahnanhänger 31 positioniert wird.

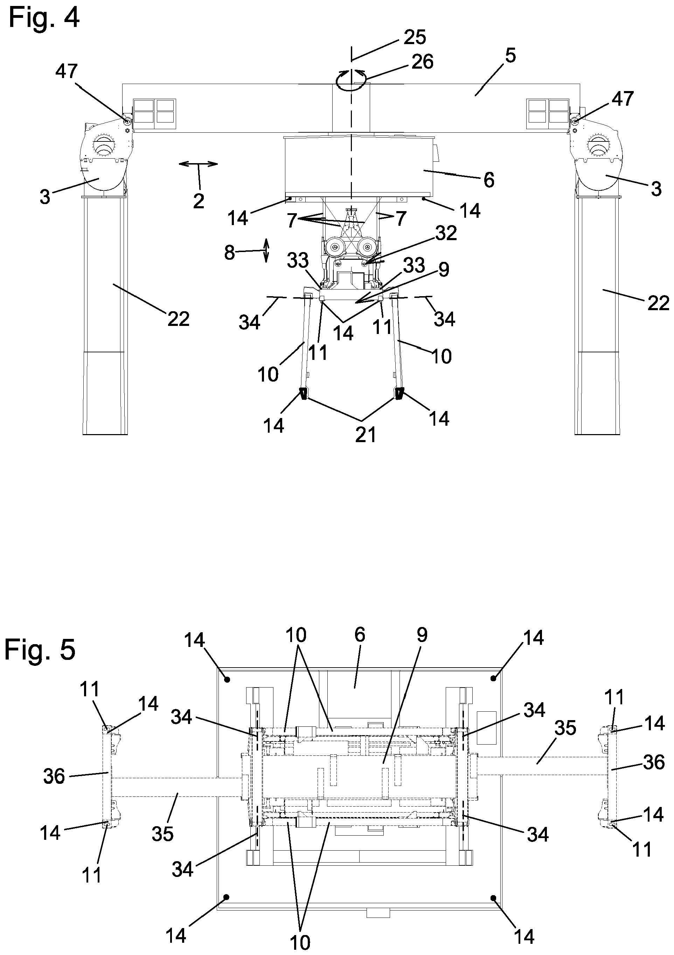

Fig. 4 zeigt nun eine schematisierte Ansicht, bei der die zweite Richtung 4 normal auf der Zeichenebene steht. Dargestellt sind die beiden Hauptträger 3 des Krans 1 und deren Fahrschienen 47, auf denen die Laufkatze 5 in Richtung entlang der zweiten Richtung 4 hin und her verfahrbar gelagert ist. An der Laufkatze 5 ist der Windenträger 6 angebracht und zwar in diesem Ausführungsbeispiel so, dass es um die vertikale Drehachse 25 in den Drehrichtungen 26 relativ zur Laufkatze 5 verdreht werden kann. Am Windenträger 6 hängt in an sich bekannter Art und Weise mittels Seilen 7 die Lastaufnahmevorrichtung 9. Konkret ist hier vorgesehen, dass sich auf der Lastaufnahmevorrichtung 9 ein Rollenrahmen 32 befindet, welcher die Verbindung zwischen den Seilen 7 und der Lastaufnahmevorrichtung 9 realisiert. Solche Rollenrahmen 32 wie auch verschiedenste andere Arten von Seilaufhängungen für die Lastaufnahmevorrichtung 9 sind an sich bekannt und müssen hier nicht erläutert werden. Natürlich kann auch auf einen Rollenrahmen 32 verzichtet werden, z.B. indem vorgesehen ist, dass die Seile 7 mittels Ankerpunkten oder Seilrollen oder dergleichen direkt an der Lastaufnahmevorrichtung 9 befestigt sind.

Um sowohl Sattelauflieger 12 als auch Container 13 greifen zu können, weist die Lastaufnahmevorrichtung 9 dieses Ausführungsbeispiels verschiedene Greifwerkzeuge 10, 11 auf. Dies sind zum einen die als Zangenarme ausgebildeten Greifwerkzeuge 10 zum Aufnehmen eines Sattelaufliegers 12 und zum anderen die als Verriegelungszapfen bzw. als Twistlock ausgebildeten Greifwerkzeuge 11 zur Aufnahme eines Containers 13. Solche Zangenarme und Verriegelungszapfen sind ebenfalls an sich bekannt und müssen nicht näher erläutert werden. Eingezeichnet sind in Fig. 4 auch die ersten Schwenkachsen 33 und die zweiten Schwenkachsen 34. Um die ersten Schwenkachsen 33 können die als Zangenarme ausgebildeten Greifwerkzeuge 10 in an sich bekannter Art und Weise auf sich zu und voneinander weg geschwenkt werden, um so einen Sattelauflieger 12 zu greifen und auch loslassen zu können. Um die zweiten Schwenkachsen 34 werden die Greifwerkzeuge 10 in Form der Zangenarme dann verschwenkt, wenn sie nicht benötigt werden. Z.B. in Situationen, in denen ein Container 13 mittels der Greifwerkzeuge 11 gegriffen werden soll. Auch das Verschwenken der Zangenarme bzw. Greifwerkzeuge 10 um die zweiten Schwenkachsen 34 ist an sich bekannt und muss nicht weiter erläutert werden.

Auch wenn die Erfindung mit einer minimalen Anzahl von nur einer Kamera 14 umgesetzt werden kann, so ist auch in diesem Ausführungsbeispiel eine Vielzahl von Kameras 14 vorgesehen. So befinden sich an der Unterseite des Windenträgers 6 vier vertikal nach unten blickende, voneinander distanzierte Kameras 14. Bevorzugt sind diese vier Kameras 14 jeweils in einer der Ecken des Windenträgers 6 angebracht. Zusätzlich weist auch die Lastaufnahmevorrichtung 9 in diesem Ausführungsbeispiel vier weitere Kameras 14 auf. Jede dieser Kameras 14 befindet sich in unmittelbarer Nähe eines der als Verriegelungszapfen ausgebildeten Greifwerkzeuge 11 an hier mittels der Teleskope 35 ein- und ausfahrbaren Greiferträgern 36 der Lastaufnahmevorrichtung 9. Zusätzlich sind in diesem Ausführungsbeispiel aber auch an den als Zangenarmen ausgeführten Greifwerkzeugen 10 in der Nähe der Zangenfüße 21 noch jeweils eine Kamera 14 angeordnet, welche in horizontaler Richtung zur Seite blickt.

Fig. 5 zeigt eine Ansicht von unten auf den Windenträger 6 und die darunter angeordnete Lastaufnahmevorrichtung 9. Gut zu sehen ist hier die Position sowohl der Kameras 14 am Windenträger 6 als auch der Kameras 14 an der Lastaufnahmevorrichtung 9 bzw. deren Greiferträger 36. Die Teleskope 35 sind hier schematisiert dargestellt, beim Stand der Technik aber an sich bekannt. Sie erlauben es, die Greiferträger 36 mit den daran angeordneten Greifwerkzeugen 11 in Form der Verriegelungszapfen ein- und auszufahren, um so die Länge der Lastaufnahmevorrichtung 9 an die Länge des jeweils aufzunehmenden Containers 13 anzupassen. In Fig. 5 sind die Greifwerkzeuge 10 in Form der Zangenarme um die zweiten Schwenkachsen 34 nach oben geschwenkt dargestellt. Sie befinden sich somit in Fig. 5 in ihrer inaktiven Position, welche dazu verwendet wird, Container 13 mittels der Lastaufnahmevorrichtung 9 zu verladen.

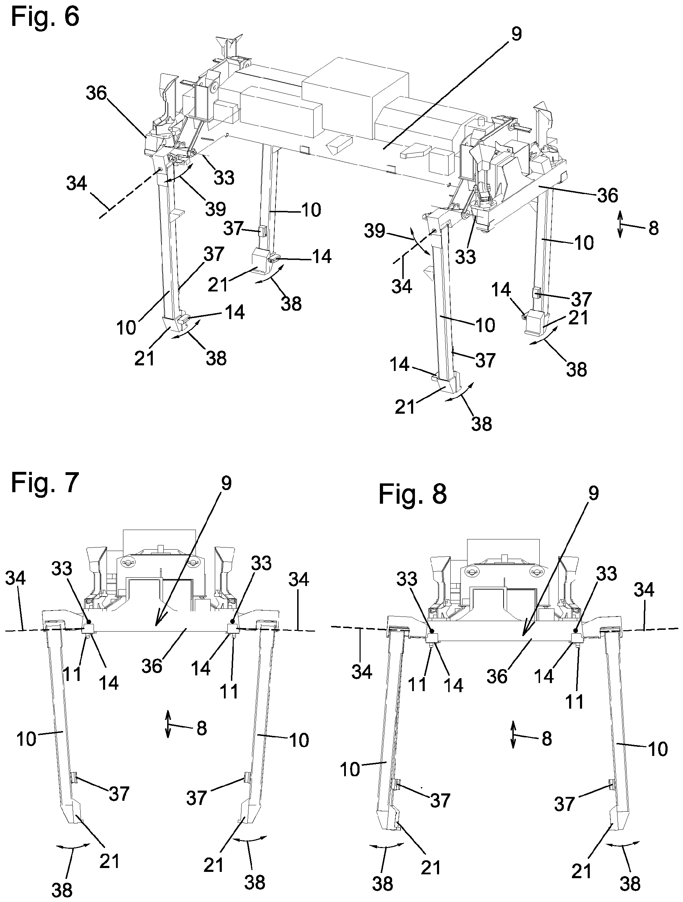

Fig. 6 zeigt die Lastaufnahmevorrichtung 9 in einer perspektivischen Darstellung, wobei die Greifwerkzeuge 10 in Form der Zangenarme in ihre aktive Position heruntergeschwenkt sind, in der sie Sattelauflieger 12 greifen können. Das Verschwenken der Zangenarme bzw. Greifwerkzeuge 10 auf einander zu und voneinander weg um die erste Schwenkachse 33, erfolgt in den ersten Schwenkrichtungen 38 um den Sattelauflieger 12 zu greifen oder loszulassen. Das Verschwenken in den zweiten Schwenkrichtungen 39 um die zweiten Schwenkachsen 34 erfolgt, um die Greifwerkzeuge 10 in Form der Zangenarme zwischen ihrer in Fig. 6 dargestellten aktiven Position und ihrer in Fig. 5 dargestellten inaktiven Position hin und her schwenken zu können. Gut zu erkennen ist in Fig. 6 auch die Lage der in der Nähe der Zangenfüße 21 an den Greifwerkzeugen 10 angebrachten Kameras 14, deren Funktionsweise noch weiter hinten erläutert wird. Dargestellt sind auch Zusatzkameras 37, welche vorhanden sein können, aber in der Regel nicht zur Umsetzung der Erfindung eingesetzt werden. Die Zangenfüße 21 sind günstigerweise, wie auch dargestellt, hakenförmig ausgebildet, damit sie entsprechende Greifkanten 19 der Sattelauflieger 12 in an sich bekannter Art und Weise hintergreifen können. Natürlich werden auch andere Befestigungen der Greifwerkzeuge bzw. Zangenarme 10 an den Sattelaufliegern 12 denkbar. Dasselbe gilt für die Greifwerkzeuge 11 zur Aufnahme von Containern 13. Auch hier muss es sich also nicht zwingend um Verriegelungszapfen handeln. Auch andere Greifwerkzeuge 11 können zum Einsatz kommen, um entsprechende Container 13 zu greifen.

In Fig. 7 sind die Greifwerkzeuge 10 in Form der Zangenarme jedenfalls um die erste Schwenkachse 33 aufeinander zu geschwenkt und in Fig. 8 voneinander weg geschwenkt dargestellt.

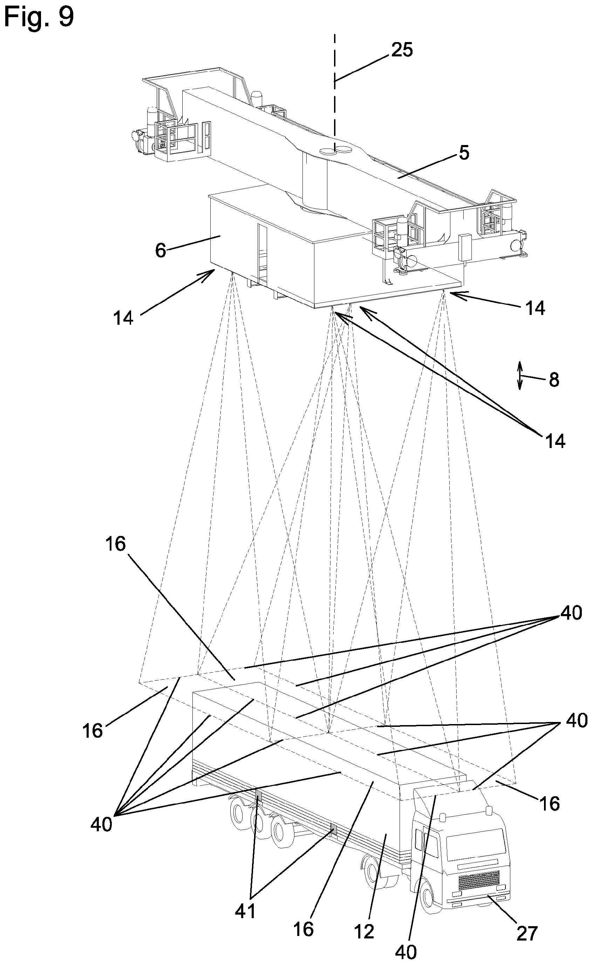

Fig. 9 zeigt nun zum ersten Ausführungsbeispiel eines erfindungsgemäßen Krans 1 die Laufkatze 5 und der daran angeordnete Windenträger 6 mit seinen vier vertikal nach unten blickend ausgerichteten Kameras 14. Die anderen Bauteile des Kran 1 und insbesondere die Lastaufnahmevorrichtung 9 sind in Fig. 9 nicht dargestellt. Die Lastaufnahmevorrichtung 9 wird beim nachfolgend geschilderten Ausrichten jedenfalls in der Praxis günstigerweise so weit vertikal nach oben verfahren, dass sie die in Fig. 9 mittels gestrichelten Linien dargestellten Blickwinkel der einzelnen Kameras 14 am Windenträger 6 nicht stören.

In der in Fig. 9 dargestellten Situation können die vier vertikal nach unten blickend ausgerichteten Kameras 14 am Windenträger 6 jeweils Bilder 16 in voneinander getrennten Sektoren aufnehmen, welche dann, wie weiter unten erläutert, gemeinsam nebeneinander auf einem Bildschirm 17 dargestellt werden können. Fig. 9 zeigt exemplarisch, wie mittels der vier Kameras 14 von oben Bilder des darunter angeordneten LKW's 27 mit dem Sattelauflieger 12 in voneinander getrennten aber benachbart zueinander angeordneten Sektoren aufgenommen werden können. Die einzelnen Bilder 16 sind in der dargestellten Aufnahmeebene jeweils von den Bildbegrenzungen 40 begrenzt.

Auch wenn dies hier nicht dargestellt ist, so könnten in analoger Art und Weise auch entsprechende vier Bilder mittels den an der Lastaufnahmevorrichtung 9 angeordneten Kameras 14 vom Sattelauflieger 12 und dem LKW 27 aufgenommen werden. Die Lastaufnahmevorrichtung 9 wird hierzu günstigerweise in eine vorgebbare Ausgangsstellung, besonders bevorzugt eben in die maximale Höhe unter dem Windenträger 6 verfahren, damit der Kranfahrer dann die Lastaufnahmevorrichtung 9 und/oder das Greifwerkzeug 10 bzw. 11 der Lastaufnahmevorrichtung 9 z.B. relativ zum zu greifenden Sattelauflieger 12 und in analoger Weise z.B. eben auch relativ zu einem zu greifenden Container 13 ausrichten kann.

Nachfolgend wird nun geschildert, wie in verschiedenen Situationen der Kranfahrer erfindungsgemäß mit Hilfe von in die Bilder 16 eingeblendeten Hilfsgrafiken 18 die Lastaufnahmevorrichtung 9 und/oder das Greifwerkzeug 10 bzw. 11 der Lastaufnahmevorrichtung 9 relativ zum zu greifenden Sattelauflieger 12 und/oder Container 13 ausrichten kann.

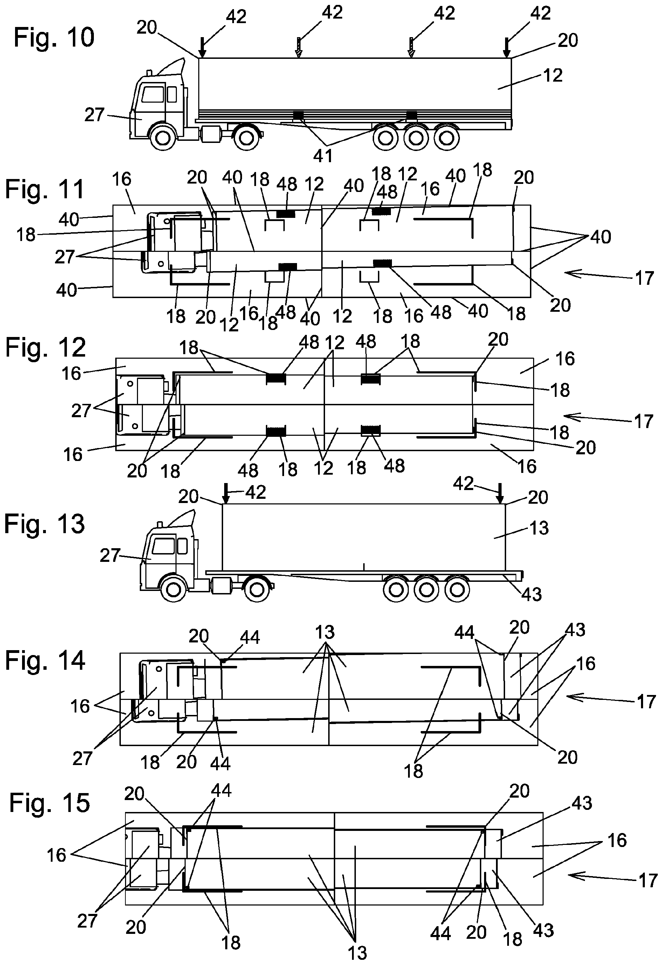

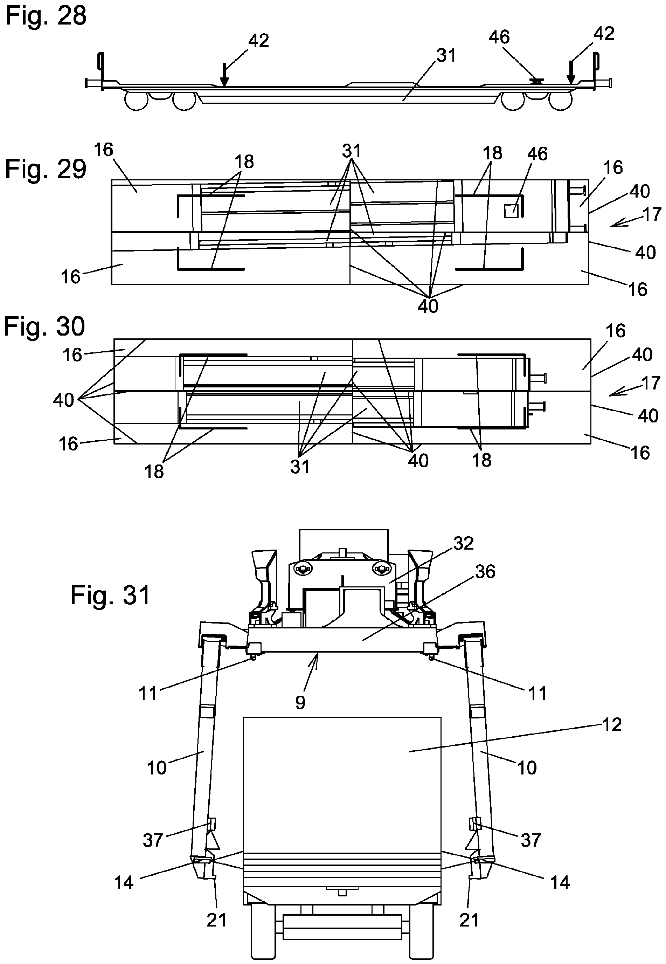

Fig. 10 zeigt hierzu zunächst eine Seitenansicht auf einen mittels LKW 27 gezogenen Sattelauflieger 12, welcher zum Verladen des Sattelaufliegers 12 in einem Bereich abgestellt werden kann, in dem der Kran 1 mittels der Lastaufnahmevorrichtung 9 den Sattelauflieger 12 aufnehmen und entsprechend verladen kann. Seitlich am Sattelauflieger 12 befinden sich Farbplatten 41, auf deren Funktion weiter hinten anhand der Fig. 31 bis 33 noch eingegangen wird.

Zunächst besteht für den Kranfahrer die Aufgabe, bei vorzugsweise ganz nach oben gefahrener Lastaufnahmevorrichtungen 9 die Lastaufnahmevorrichtung 9 so über dem zu verladenden Sattelauflieger 12 zu positionieren, dass die Lastaufnahmevorrichtung 9 anschließend mit ihren Greifwerkzeugen 10 in Form der Zangenarme so auf den Sattelauflieger 12 herabgelassen werden kann, dass der Sattelauflieger 12 zwischen den Greifwerkzeugen 10 in Form der Zangenarme optimal zum Greifen des Sattelaufliegers 12 ausgerichtet ist.

Fig. 11 zeigt nun schematisiert eine Darstellung des Bildschirms 17 des Steuerstandes 15, auf dem in diesem Ausführungsbeispiel wie in Fig. 9 gezeigt, die vier momentan aufgenommenen Bilder 16 der vier Kameras 14 am Windenträger 6 nebeneinander dargestellt werden. In jedes der Bilder 16 ist eine zumindest eine Hilfsgrafik 18 als Hilfsmittel für den Kranfahrer zum Ausrichten der Lastaufnahmevorrichtung 9 und/oder des Greifwerkzeugs 10 bzw. 11 der Lastaufnahmevorrichtung 9 eingeblendet. In diesem Beispiel handelt es sich bei den jeweiligen Hilfsgrafiken 18 zunächst einmal jeweils um zwei orthogonal zueinander ausgerichtete Hilfslinien, welche dem Ausrichten an jeweils einer Ecke 20 des Sattelaufliegers 12 dienen. Jedes der auf dem Bildschirm 17 dargestellten Bilder 16 ist von seinen Bildbegrenzungen 40 begrenzt. In Fig. 10 zeigen die Pfeile 42 in der Nähe der Ecken 20 die Ebene an der Oberkante des Sattelaufliegers 12, welche vom Kranfahrer beim nachfolgend geschilderten Ausrichtvorgang betrachtet wird. Dies ist die Ebene, in der die oberen Ecken 20 des Sattelaufliegers 12 liegen. Fig. 11 zeigt nun die Ausgangssituation, in der der Windenträger 6 und damit die noch nach oben gezogene Lastaufnahmevorrichtung 9 noch nicht in geeigneter Weise über dem Sattelauflieger 12 ausgerichtet sind, um die Lastaufnahmevorrichtung 9 so auf den Sattelauflieger 12 herunterfahren zu können, dass letztere mittels der Greifwerkzeuge 10 in Form der Zangenarme gegriffen werden kann.

Fig. 11 und auch die nachfolgenden Figuren zeigen beispielhaft auch, dass die vier auf dem Bildschirm 17 dargestellten Bilder 16 nicht zwingend so optimal relativ zueinander ausgerichtet sein müssen, dass sie die jeweils in ihnen dargestellten Teile des Sattelaufliegers 12 bzw. LKW's 27 ohne Versatz zeigen. Ein in Fig. 11 beispielhaft dargestellter Versatz stört das nachfolgend geschilderte Verfahren bei der Ausrichtung nicht.

Bei Betrachtung des in Fig. 11 dargestellten Bildschirms 17 erkennt der Kranfahrer jedenfalls in einfacher Art und Weise, dass die Außenumrisse des Sattelaufliegers 12 und insbesondere seine Ecken 20 noch nicht in geeigneter Art und Weise in Deckung mit den, den Ecken 20 zuzuordnenden Hilfsgrafiken 18 liegen. Der Kranfahrer kann der Fig. 11 in einfacher Art und Weise entnehmen, dass die Lastaufnahmevorrichtung 9 zunächst noch relativ zum Sattelauflieger 12 ausgerichtet werden muss, bevor die Lastaufnahmevorrichtung 9 zum Aufnehmen des Sattelaufliegers 12 auf diesen heruntergefahren werden kann. Zum Ausrichten kann der Kranfahrer den Kran 1 entlang der ersten Richtung 2 und die Laufkatze 5 entlang der zweiten Richtung 4 so verfahren, dass die Außenkonturen und insbesondere die Ecken 20 des Sattelaufliegers 12 in ausreichender Art und Weise in Deckung mit den in die Bilder 16 eingeblendeten Hilfsgrafiken 18 zu liegen kommen. Gegebenenfalls kann der Windenträger 6 dabei auch um die Drehachse 25 in einer der Drehrichtungen 26 relativ zur Laufkatze 5 gedreht werden, wenn dies zur optimalen Ausrichtung notwendig ist. Beim Ausrichten der Lastaufnahmevorrichtung 9 muss, wie in Fig. 12 dargestellt, nicht unbedingt ideale Deckung erreicht werden. Es reicht, wenn die auf den in den Bildern 16 zu sehenden Außenkonturen, insbesondere Ecken 20, des Sattelaufliegers 12 möglichst symmetrisch bezüglich der Hilfsgrafiken 18 zu liegen kommen. Ist der Zustand, wie er in Fig. 12 beispielhaft gezeigt ist, erreicht, so ist der Windenträger 6 mit der Lastaufnahmevorrichtung 9 für den nachfolgenden Verladevorgang optimal über dem Sattelauflieger 12 positioniert. Die Lastaufnahmevorrichtung 9 kann nun herabgelassen werden, wodurch der Sattelauflieger 12 für den anschließenden Greifvorgang gut positioniert zwischen den Greifern 10 in Form der Zangenarme zu liegen kommt.

Werden nicht die mittels der Kameras 14 am Windenträger 6 aufgenommenen Bilder 16 sondern die Bilder 16, der an der Lastaufnahmevorrichtung 9 angeordneten Kameras 14 verwendet, so ergibt sich letztendlich derselbe Vorgang, wobei die Lastaufnahmevorrichtung 9 sich eben beim Ausrichten in einer vorgebbaren Ausgangshöhe, vorzugsweise in der maximal möglichen Höhe, über dem Sattelauflieger 12 befinden sollte. Für diese Ausgangshöhe können dann auch die entsprechenden Hilfsgrafiken 18 entsprechend in die Bilder 16 eingeblendet werden.

Sattelauflieger 12 mit Farbplatten 41 können auf ihrem Dach auch zusätzliche Markierungen 48 aufweisen, die die Lage der Farbplatten 41 auch in einer Draufsicht für den Kranfahrer erkennbar machen. Solche Markierungen 48 sind in den Fig. 11 und 12 zusätzlich eingezeichnet. Ihre Lage ist in Fig. 10 durch die weiter innen liegenden schraffierten Pfeile 42 gekennzeichnet. Diese Markierungen 48 können ebenfalls dazu genutzt werden, um an entsprechend angeordneten, hier in Fig. 11 und 12 jeweils beispielhaft u-förmig ausgebildeten Hilfsgrafiken 18 ausgerichtet zu werden. Ob der Kranfahrer nun die für die Ecken 20 eingerichteten Hilfsgrafiken 18 oder die für die Markierungen 48 eingerichteten Hilfsgrafiken 18 oder beide Arten von Hilfsgrafiken 18 für den oben geschilderten Prozess des Ausrichtens der Lastaufnahmevorrichtung 9 heranzieht, liegt im Belieben des Kranfahrers.

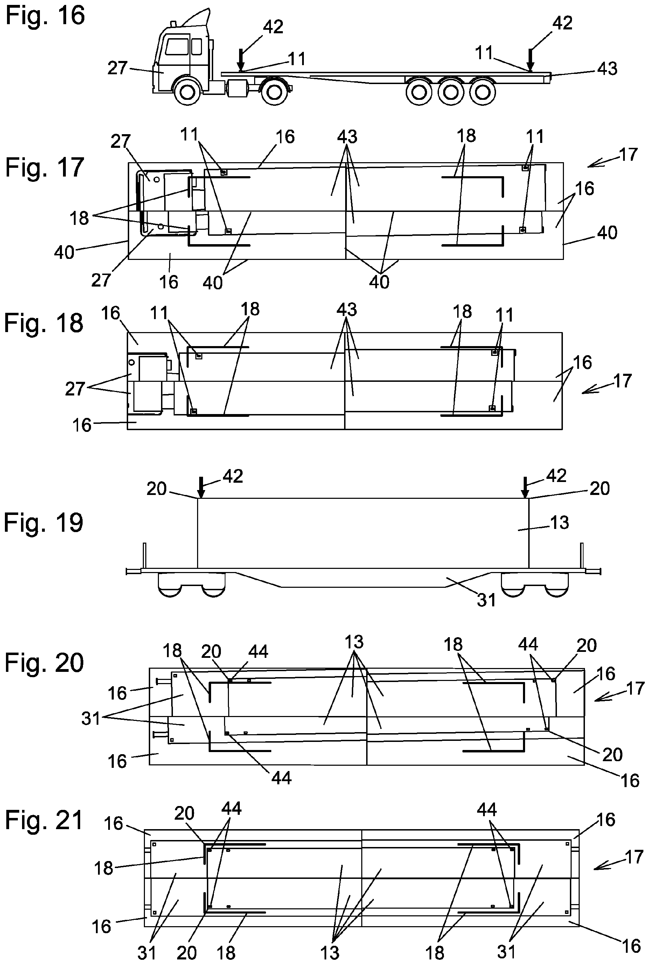

Die Fig. 13 bis 15 veranschaulichen nun dieselbe Vorgangsweise, wenn nicht ein Sattelauflieger 12 sondern ein in Fig. 13 in einer Seitenansicht dargestellter, auf einem Tieflader 43 des LKW's 27 angeordneter Container 13 aufgenommen und verladen werden soll. In Fig. 13 zeigen die Pfeile 42 wiederum die Ebene im Bereich der oberen Ecken 20 des Containers 13, welche in der Betrachtung der Bilder 16 für den geschilderten Ausrichtevorgang ausschlaggebend ist. Fig. 14 zeigt die auf dem Bildschirm 17 dargestellten Bilder 16 der Kameras 14 des Windenträgers 6 vor dem Ausrichten des Windenträgers 6 mit der Lastaufnahmevorrichtung 9 relativ zum Container 13. In Fig. 14 erkennt der Kranfahrer anhand der Hilfsgrafiken 18 ohne Weiteres, dass die Lastaufnahmevorrichtung 9 noch nicht in geeigneter Art und Weise über dem Container 13 positioniert ist. Durch entsprechendes Verfahren des Krans 1 entlang der ersten Richtung 2, der Laufkatze 5 entlang der zweiten Richtung 4 und gegebenenfalls mit notwendigem Drehen des Windenträgers 6 um die Drehachse 25 kann der Kranfahrer nun den Windenträger 6 mit der Lastaufnahmevorrichtung 9 so lange verfahren, bis die in Fig. 15 dargestellte Situation erreicht ist. In Fig. 15 liegen die Außenkonturen des Containers 13 mit seinen Ecken 20 optimal zwischen den in die Bilder 16 eingeblendeten Hilfsgrafiken 18, sodass der Kranfahrer nun in einfacher Art und Weise erkennt, dass die Lastaufnahmevorrichtung 9 ausreichend genau für den nachfolgenden Verladevorgang über dem Container 13 ausgerichtet ist. Ist die Situation gemäß Fig. 15 erreicht, so kann die Lastaufnahmevorrichtung 9, mit der Länge des Containers 13 entsprechend weit ausgefahrenen Greiferträgern 36, so auf den Container 13 herabgelassen werden, dass die an den Greiferträgern 36 angeordneten Greifwerkzeuge 11 in Form der Verriegelungszapfen bzw. Twist Locks in die Eckbeschläge 4 bzw. Corner casts 44 des Containers 13 eingefahren und dort verriegelt werden können. Anschließend kann der Container 13 an der Lastaufnahmevorrichtung 9 hängend vom Tieflader 43 abgehoben werden. Die für diesen Verladevorgang des Containers 13 nicht benötigten Greifwerkzeuge 10 in Form der Zangenarme sind dabei in ihre vorab erläuterte inaktive Position geschwenkt, sodass sie das Greifen des Containers 13 mit den Greifwerkzeugen 11 in Form der Verriegelungszapfen nicht behindern. Während in den Fig. 13 bis 15 ein Container 13 von einem Tieflader 43 eines LKW's 27 abgeladen werden soll, zeigen die Fig. 16 bis 18 beispielhaft die Situation, wenn die Lastaufnahmevorrichtung 9 mit einem daran befestigten Container 13 so über einem leeren Tieflader 43 positioniert werden soll, dass der Container 13 daran anschließend auf den Tieflader 43 aufgeladen werden kann. Hierzu muss der Kranfahrer nun die durch die Pfeile 42 in Fig. 16 veranschaulichte Ebene im Bereich der Oberkante des Tiefladers 43 betrachten. In dieser Ebene befinden sich auf dem Tieflader 43 auch Verriegelungszapfen 11, mit denen der Container 13 mit seinen auf der Bodenseite angeordneten Eckbeschlägen 44 auf dem Tieflader 43 befestigt werden kann. Fig. 17 zeigt wiederum den Bildschirm 17 mit den vier Bildern 16 in der Situation, in der die Lastaufnahmevorrichtung 9 noch nicht ausreichend gut über dem Tieflader 43 ausgerichtet ist. Fig. 18 zeigt die Situation nach entsprechender Ausrichtung der Lastaufnahmevorrichtung 9 in der geschilderten Art und Weise über dem Tieflader 43. Der Kranfahrer erkennt mittels der in die Bilder 16 eingeblendeten Hilfsgrafiken 18 und ihrer Lage relativ zu den Verriegelungszapfen 11 auf dem Tieflader 43, dass nun die Lastaufnahmevorrichtung 9 mit dem daran befestigten Container 13 ideal bzw. zumindest ausreichend gut über dem Tieflader 43 positioniert ist, sodass anschließend die Lastaufnahmevorrichtung 9 mit dem Container 13 auf den Tieflader 43 abgesenkt werden kann, um den Container 13 auf den Tieflader 43 aufzuladen.

Fig. 19 zeigt die Situation, wenn ein Container 13 von einem Eisenbahnanhänger 31 abgeladen werden soll. In dieser Situation ist von dem Kranfahrer wiederum die Ebene im Bereich des oberen Endes des Containers 13 mit den Ecken 20 zu betrachten, siehe Pfeile 42. Fig. 20 zeigt wiederum den Bildschirm 17 mit den Bildern 16 und den darin eingeblendeten Hilfsgrafiken 18 vor dem Ausrichten des Windenträgers 6 mit der Lastaufnahmevorrichtung 9. Fig. 21 zeigt den Zustand, wenn nach Verfahren des Krans 1 entlang der ersten Richtung 2, der Laufkatze 5 entlang der zweiten Richtung 4 und gegebenenfalls notwendigem Drehen des Windenträgers 6 um die Drehachse 25 die Lastaufnahmevorrichtung 9 wieder ausreichend gut über dem Container 13 ausgerichtet ist. In der in Fig. 21 dargestellten Situation liegen die Außenkonturen des Containers 13 und insbesondere die in den Ecken 20 angeordneten Eckbeschläge 44 auf der Oberseite des Containers 13 ausreichend symmetrisch innerhalb der mittels der Hilfsgrafiken 18 gekennzeichneten Bereiche, sodass anschließend das Herabfahren der Lastaufnahmevorrichtung 9 auf den Container 13 und dessen Befestigung an der Lastaufnahmevorrichtung 9 und anschließende Verladung stattfinden kann.

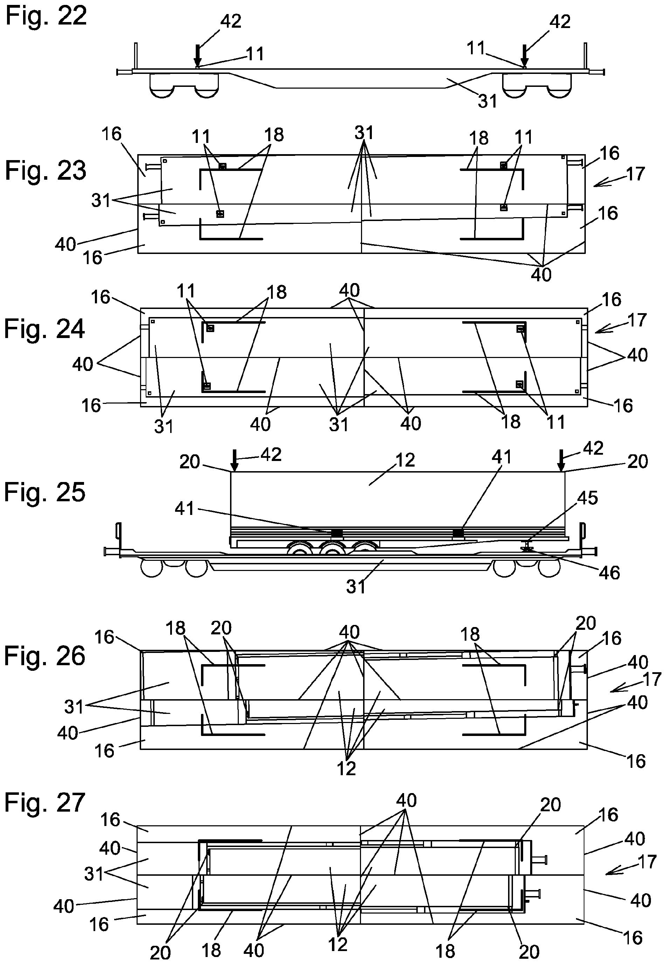

Fig. 22 zeigt die Situation, bei der auf einen leeren Eisenbahnanhänger 31 ein Container 13 aufgeladen werden soll. Hier betrachtet der Kranfahrer die mit den Pfeilen 42 in Fig. 22 gekennzeichnete Ebene auf der Oberkante des Eisenbahnanhängers 31, in der sich auch die Greifwerkzeuge 11 in Form der Verriegelungszapfen zur Befestigung des Containers 13 auf dem Eisenbahnanhänger 31 befinden. Fig. 23 zeigt wiederum schematisiert den Bildschirm 17 mit den vier nebeneinander angeordneten Bildern 16 und den dort jeweils eingeblendeten Hilfsgrafiken 18, welche dem Kranfahrer ohne Weiteres zeigen, dass die Lastaufnahmevorrichtung 9 mit dem daran hängenden Container 13 noch nicht ausreichend gut über dem Eisenbahnanhänger 31 positioniert ist. Fig. 24 zeigt, wie nach dem entsprechenden Verfahren des Krans 1, der Laufkatze 5 und gegebenenfalls notwendigem Drehen des Windenträgers 6 die Situation erreicht ist, in der der Kranfahrer anhand der eingeblendeten Hilfsgrafiken 18 erkennen kann, dass die Lastaufnahmevorrichtung 9 nun ausreichend gut für den nachfolgenden Abladevorgang, also das Aufladen des Containers 13 auf den Eisenbahnanhänger 31 ausgerichtet ist.

Fig. 25 zeigt die Situation, wenn ein Sattelauflieger 12 von einem Eisenbahnanhänger 31 bzw. Taschenwagen abgeladen werden soll. Zu sehen ist in Fig. 25 u.a. auch der Königszapfen 45 des Sattelaufliegers 12 sowie die Sattelkupplung 46 des Eisenbahnanhängers 31, welche der Befestigung des Königszapfens 45 dient. Beim Ausrichten der Lastaufnahmevorrichtung 9 über dem Sattelauflieger 12 wird wiederum die in Fig. 25 mittels der Pfeile 42 gekennzeichnete obere Begrenzungsebene des Sattelaufliegers 12 betrachtet, in der sich auch die oberen Ecken des Sattelaufliegers 12 befinden. Fig. 26 zeigt wiederum beispielhaft den Bildschirm 17 mit den vier Bildern 16 und den eingeblendeten Hilfsgrafiken 18 in dem Zustand, in dem die Lastaufnahmevorrichtung 9 noch nicht über dem Sattelauflieger 12 ausgerichtet ist. Fig. 27 zeigt den Zustand nach dem Ausrichtevorgang durch entsprechendes Verfahren des Krans 1, der Laufkatze 5 und/oder durch entsprechendes Drehen des Windenträgers 6. In Fig. 27 erkennt der Kranfahrer wiederum an der ausreichend gut ausgerichteten Lage der Ecken 20 relativ zu den Hilfsgrafiken 18, dass nun die Lastaufnahmevorrichtung 9 ausreichend genau über dem Sattelauflieger 12 für den nachfolgenden Aufnahmevorgang positioniert und ausgerichtet ist.

Fig. 28 zeigt die Situation, bei der ein entsprechender Sattelauflieger 12 auf einen Eisenbahnanhänger 31 aufgeladen werden soll. Hier ist die Ebene, welche mit den Pfeilen 42 in Fig. 28 gekennzeichnet ist, zu betrachten. Fig. 29 zeigt den noch nicht ausgerichteten Zustand und Fig. 30 wieder in analoger Art und Weise den entsprechend gut ausgerichteten Zustand, bei dem dann der Sattelauflieger 12 mittels der Lastaufnahmevorrichtung 9 auf den Eisenbahnanhänger 31 abgeladen werden kann.

In den bisher rein zur Erläuterung gezeigten Beispielen werden immer vier Kameras 14 verwendet, um deren Bilder 16 gemeinsam auf einem Bildschirm 17 des Steuerstandes 15 darzustellen. Dies muss nicht zwingend so sein. Grundsätzlich reicht für die erfindungsgemäße Vorgehensweise auch ein einziges Bild 16 einer einzigen Kamera 14, wobei dann z.B. auch vier Hilfsgrafiken 18 in dieses Bild 16 eingeblendet werden. Es wäre z.B. aber auch denkbar mit zur zwei Kameras 14 zu arbeiten und entsprechend in jedes Bild 16 der beiden Kameras 14 zwei Hilfsgrafiken 18 einzublenden, usw.

Bei den bisher geschilderten Beispielen wird die Erfindung dazu eingesetzt, die Lastaufnahmevorrichtung 9 vor ihrem Herunterfahren auf den zu verladenden Sattelauflieger 12 oder den zu verladenden Container 13 ausreichend gut über diesem auszurichten. Anhand der Fig. 31 bis 33 wird nun nachfolgend erläutert, wie die Erfindung dazu eingesetzt werden kann, dem Kranfahrer dabei zu helfen, die als Zangenarme ausgebildeten Greifwerkzeuge 10 mit ihren Zangenfüßen 21 so im Bereich der Farbplatten 41 am Sattelauflieger 12 zu positionieren, dass beim anschließenden Schwenken der Zangenarme hin zum Sattelauflieger 12 die Zangenfüße 21 optimal an den entsprechend dazu vorgesehenen Greifkanten 19 des Sattelaufliegers 12 angreifen, um den Sattelauflieger 12 anschließend anheben zu können.

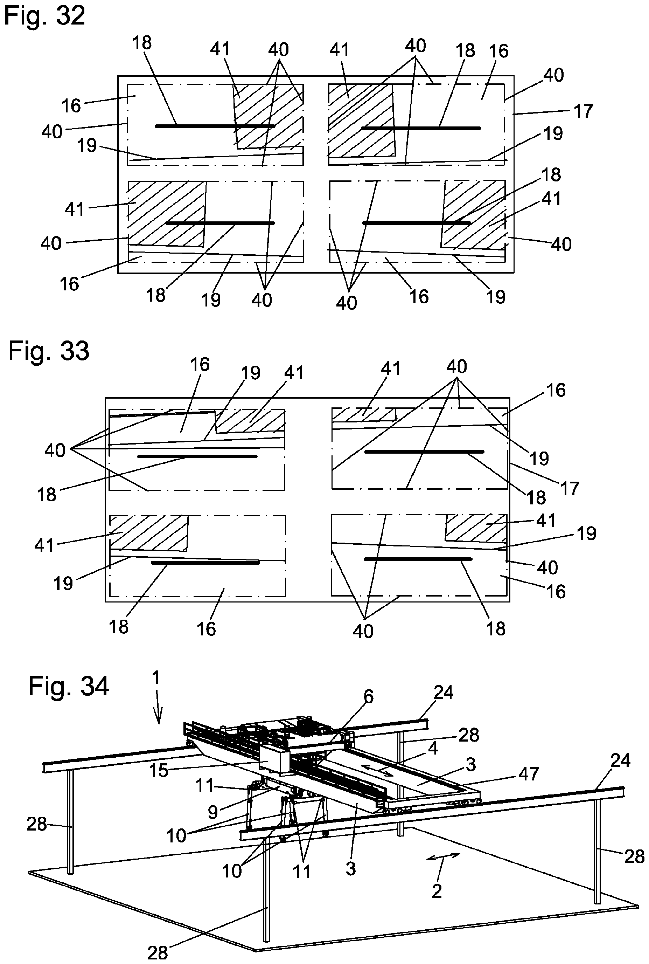

Fig. 31 zeigt die Situation, bei der die Lastaufnahmevorrichtung 9 mit ihren auseinandergeschwenkten Greifwerkzeugen 10 in Form der Zangenarme auf den Sattelauflieger 12 so herabgelassen wird, dass der Sattelauflieger 12 zwischen den auseinandergeschwenkten Zangenarmen zu liegen kommt. Hier kommen nun die an den Zangenarmen bzw. Greifwerkzeugen 10 im Bereich der Zangenfüße 21 angeordneten Kameras 14 zum Einsatz. Diese sind horizontal zur Seite blickend so angeordnet, dass sie ein Bild 16 der jeweiligen Seitenwand des Sattelaufliegers 12 wiedergeben. Dabei ist zu beachten, dass die Kameras 14 wie in diesem Beispiel auch realisiert und in Fig. 6 zu sehen, jeweils auch etwas seitlich versetzt an den Zangenfüßen 21 angebracht sein können. An den Seiten des Sattelaufliegers 12 befinden sich über den Greifkanten 19, an denen die Zangenfüße 21 angreifen sollen, auch die entsprechenden Farbplatten 41, wie sie beim Stand der Technik bekannt sind. Die Fig. 32 und 33 zeigen nun exemplarisch, wie auf einem Bildschirm 17 des Steuerstands 15 jeweils ein Bild 16 einer jeden solchen Kamera 14 am Zangenarm, also in diesem Beispiel insgesamt vier Bilder 16, dargestellt sind. In jedes dieser Bilder 16 wird eine Hilfsgrafik 18 in Form einer Hilfslinie eingeblendet. Fig. 32 zeigt die Situation, bei der die vier Zangenarme noch nicht ausreichend gut relativ zur Seitenwand des Sattelaufliegers 12 positioniert sind. Dies erkennt der Kranfahrer daran, dass die Hilfslinien 18 noch nicht in Deckung mit der jeweiligen Greifkante 19 liegen sondern in Fig. 32 beispielhaft noch bereichsweise im Bereich der jeweiligen Farbplatte 41 angeordnet ist. Die etwas windschiefe Darstellung der Farbplatten 41 und der Greiferkanten 19 in den Bildern 16 in Fig. 32 ist eine Folge der oben geschilderten seitlichen Anbringung der Kameras 14 an den Zangenfüßen 21. Bei einer zentraleren Anordnung der Kameras 14 an den Zangenfüßen 21 wäre keine oder nur eine weniger stark ausgebildete windschiefe Darstellung zu beobachten. Das gilt auch für die Bilder 16 in Fig. 33.

Durch entsprechendes Herablassen der Lastaufnahmevorrichtung 9 und/oder Verfahren des Krans 1 entlang der ersten Richtung 2 und/oder der Laufkatze 5 entlang der zweiten Richtung 4 kann die Lastaufnahmevorrichtung 9 dann so positioniert werden, dass die Zangenarme mit ihren Zangenfüßen 21 für den nachfolgenden Greifvorgang ausreichend gut relativ zum Sattelauflieger 12 positioniert sind. Dieser Zustand wird erreicht, wenn die Hilfsgrafik 18 auf der Greifkante 19 oder darunter zu liegen kommt, so wie dies in Fig. 33 für alle vier Bilder 16 der vier Kameras 14 an den vier Zangenarmen dargestellt ist. Ist dieser Zustand bei allen vier Zangenarmen erreicht, so können diese mit ihren Zangenfüßen 21 zum Sattelauflieger 12 hin geschwenkt werden, sodass die Zangenfüße 21 die Greifkanten 19 des Sattelaufliegers 12 hintergreifen und der Sattelauflieger 12 anschließend mit der Lastaufnahmevorrichtung 9 angehoben werden kann.

Günstigerweise befindet sich an jedem Zangenarm bzw. Greifwerkzeug 10 eine entsprechende Kamera 14, sodass sich, wie in den Fig. 32 und 33 dargestellt, entsprechende vier Bilder 16 ergeben, die entweder, wie in den Fig. 32 und 33 ebenfalls dargestellt, gemeinsam auf einem Bildschirm 17 oder auf voneinander getrennten Bildschirmen 17 dargestellt werden, wobei jeweils eine entsprechende Hilfsgrafik 18 eingeblendet wird. Grundsätzlich ist es aufgrund der gegebenen Symmetrien aber auch denkbar, mit nur ein, zwei oder drei Kameras 14 und einer entsprechenden Anzahl von Bildern 16 an den entsprechenden Zangenarmen erfindungsgemäß vorzugehen.

Die Bilder 16 in Fig. 33 veranschaulichen auch, dass die Greifkanten 19 nicht exakt auf den Hilfsgrafiken 18 zu liegen kommen müssen, damit der Kranfahrer den Greifvorgang auslösen kann. In den Bildern 16 der Fig. 33 ist trotz der windschiefen Darstellung und der nicht exakten Ausrichtung der Hilfsgrafiken 18 an den Greifkanten 19 vielmehr für den Kranfahrer gut zu erkennen, dass nun eine Stellung erreicht ist, in der die Zangenfüße 21 so weit abgesenkt und ausreichend gut positioniert sind, dass der Greifvorgang durchgeführt werden kann. Dies ist natürlich nur ein Beispiel dafür, dass die Hilfsgrafiken 18 auch dann schon die vom Kranfahrer benötigten Informationen liefern können, wenn keine exakte Ausrichtung erfolgt.

Die in Fig. 31 noch dargestellten Zusatzkameras 37 an den Zangenarmen, welche vertikal nach unten blicken, können als zusätzliche Absicherung und Hilfe für den Kranfahrer beim Absenken der Lastaufnahmevorrichtung 9 zum Einsatz kommen.

Wie eingangs bereits erläutert, muss es sich bei erfindungsgemäßen Kränen nicht zwingend um sogenannte Portalkräne handeln, wie dies im ersten Ausführungsbeispiel dargestellt ist. Fig. 34 zeigt beispielhaft einen sogenannten Brückenkran, bei dem die Hauptträger 3 mittels Rädern 23 entlang der ersten Richtung 2 auf Führungsschienen 24 hin und her verfahrbar gelagert sind. Die Führungsschienen 24 sind in Fig. 34 auf einer Tragkonstruktion 28 gelagert. Sie können aber natürlich genauso gut an Gebäudewänden oder dergleichen angebracht sein. Jedenfalls kann der als Brückenkran ausgebildete Kran 1 in Fig. 34 analog wie beim ersten Ausführungsbeispiel erläutert mit entsprechenden Kameras 14 am Bildschirm 17 usw. ausgerüstet sein, sodass auch solche Kräne 1 erfindungsgemäß ausgebildet und mittels erfindungsgemäßer Verfahren betrieben werden können.

In den hier gezeigten Ausführungsbeispielen werden Lasten in Form von Sattelaufliegern 12 und Containern 13 erfindungsgemäß verladen. Die Erfindung ist aber natürlich nicht hierauf beschränkt, sondern kann insbesondere mit entsprechend ausgebildeten Greifwerkzeugen auch für das Verladen anderer Lasten genutzt werden.

### Legende zu den Hinweisziffern:

| | | | |
|---|---|---|---|
| 1 | Kran | 30 | Eisenbahnschiene |
| 2 | erste Richtung | 31 | Eisenbahnanhänger |
| 3 | Hauptträger | 32 | Rollenrahmen |
| 4 | zweite Richtung | 33 | erste Schwenkachse |
| 5 | Laufkatze | 34 | zweite Schwenkachse |
| 6 | Windenträger | 35 | Teleskop |
| 7 | Seil | 36 | Greiferträger |
| 8 | vertikale Richtung | 37 | Zusatzkamera |
| 9 | Lastaufnahmevorrichtung | 38 | erste Schwenkrichtung |
| 10 | Greifwerkzeug | 39 | zweite Schwenkrichtung |
| 11 | Greifwerkzeug | 40 | Bildbegrenzung |
| 12 | Sattelauflieger | 41 | Farbplatte |
| 13 | Container | 42 | Pfeil |
| 14 | Kamera | 43 | Tieflader |
| 15 | Steuerstand | 44 | Eckbeschlag |
| 16 | Bild | 45 | Königszapfen |
| 17 | Bildschirm | 46 | Sattelkupplung |
| 18 | Hilfsgrafik | 47 | Fahrschiene |
| 19 | Greifkante | 48 | Markierung |
| 20 | Ecke | | |
| 21 | Zangenfuß | | |
| 22 | Vertikalstütze | | |
| 23 | Rad | | |
| 24 | Führungsschiene | | |
| 25 | Drehachse | | |
| 26 | Drehrichtung | | |
| 27 | LKW | | |
| 28 | Tragkonstruktion | | |
| 29 | Kranschiene | | |

## Patentansprüche

1. Kran (1) mit zumindest einem, entlang einer ersten Richtung (2) hin und her verfahrbaren Hauptträger (3) und einer an dem zumindest einen Hauptträger (3) entlang einer zweiten Richtung (4) hin und her verfahrbar gelagerten Laufkatze (5), wobei die erste Richtung (2) und die zweite Richtung (4) orthogonal zueinander ausgerichtet sind und an der Laufkatze (5) ein Windenträger (6), insbesondere drehbar, befestigt ist und am Windenträger (6) eine, mittels Seilen (7) in vertikaler Richtung (8) auf und ab verfahrbare, Lastaufnahmevorrichtung (9) hängt, wobei die Lastaufnahmevorrichtung (9) Greifwerkzeuge (10, 11) zum lösbaren Greifen einer Last, insbesondere eines Sattelaufliegers (12) und/oder eines Containers (13), aufweist und der Kran (1) zumindest eine Kamera (14) und zumindest einen Steuerstand (15) für einen Kranfahrer zum Verfahren des zumindest einen Hauptträgers (3), der Laufkatze (5) und der Lastaufnahmevorrichtung (9) sowie zum Bedienen der Greifwerkzeuge (10, 11) der Lastaufnahmevorrichtung (9) aufweist und der Steuerstand (15) zumindest einen Bildschirm (17) zur Wiedergabe des jeweils momentan von der Kamera (14) aufgenommenen Bildes (16) aufweist, **dadurch gekennzeichnet, dass** auf dem zumindest einen Bildschirm (17) in die Wiedergabe des jeweils momentan von der Kamera (14) aufgenommenen Bildes (16) zusätzlich zumindest eine Hilfsgrafik (18) als Hilfsmittel für den Kranfahrer zum Ausrichten der Lastaufnahmevorrichtung (9) und/oder des Greifwerkzeugs (10, 11) der Lastaufnahmevorrichtung (9) relativ zur zu greifenden Last einblendbar ist.

2. Kran (1) nach Anspruch 1, **dadurch gekennzeichnet, dass** die Hilfsgrafik (18) zumindest eine Hilfslinie zum Ausrichten an einer Greifkante (19) der zu greifenden Last oder zumindest zwei orthogonal zueinander ausgerichtete Hilfslinien zum Ausrichten an einer Ecke (20) der zu greifenden Last umfasst.

3. Kran (1) nach Anspruch 1 oder 2, **dadurch gekennzeichnet, dass** die zumindest eine Kamera (14) am Windenträger (6) oder an der Lastaufnahmevorrichtung (9) angebracht und vertikal nach unten blickend ausgerichtet ist.

4. Kran (1) nach einem der Ansprüche 1 bis 3, **dadurch gekennzeichnet, dass** am Windenträger (6) oder an der Lastaufnahmevorrichtung (9) vier vertikal nach unten blickend ausgerichtete Kameras (14) voneinander distanziert angebracht sind und die jeweils momentan aufgenommenen Bilder (16) der vier Kameras (14) in vier getrennten Sektoren nebeneinander auf dem zumindest einen Bildschirm (17) zusammen mit jeweils zumindest einer eingeblendeten Hilfsgrafik (18) wiedergebbar sind.

5. Kran (1) nach einem der Ansprüche 1 bis 4, **dadurch gekennzeichnet, dass** die Lastaufnahmevorrichtung (9) als Greifwerkzeuge (10) schwenkbar gelagerte Zangenarme zum Greifen eines Sattelaufliegers (12) aufweist und an zumindest einem der Zangenarme die Kamera (14) horizontal zur Seite blickend angeordnet ist.

6. Kran (1) nach Anspruch 5, **dadurch gekennzeichnet, dass** die Kamera (14) in einem unteren Endbereich des Zangenarms im Bereich eines Zangenfußes (21) des Zangenarms angeordnet ist.

7. Kran (1) nach einem der Ansprüche 1 bis 6, **dadurch gekennzeichnet, dass** er zwei, entlang der ersten Richtung (2) hin und her verfahrbare Hauptträger (3) aufweist, auf denen die Laufkatze (5) entlang der zweiten Richtung (4) hin und her verfahrbar gelagert ist.

8. Kran (1) nach einem der Ansprüche 1 bis 7, **dadurch gekennzeichnet, dass** der Kran ein (1) Portalkran mit auf Rädern (23) verfahrbaren Vertikalstützen (22) ist, wobei der oder die Hauptträger (3) auf den Vertikalstützen (22) gelagert und zusammen mit den Vertikalstützen (22) auf den Rädern (23) entlang der ersten Richtung (2) hin und her verfahrbar ist bzw. sind.

9. Kran (1) nach einem der Ansprüche 1 bis 7, **dadurch gekennzeichnet, dass** der Kran (1) ein Brückenkran ist, wobei der oder die Hauptträger (3) mittels Rädern (23) entlang der ersten Richtung (2) auf Führungsschienen (24) hin und her verfahrbar ist bzw. sind.

10. Verfahren zum Betrieb eines Krans (1) nach einem der Ansprüche 1 bis 9, **dadurch gekennzeichnet, dass** auf dem zumindest einen Bildschirm (17) in die Wiedergabe des jeweils momentan von der Kamera (14) aufgenommenen Bildes (16) zusätzlich zumindest eine Hilfsgrafik (18) als Hilfsmittel für den Kranfahrer zum Ausrichten der Lastaufnahmevorrichtung (9) und/oder des Greifwerkzeugs (10, 11) der Lastaufnahmevorrichtung (9) relativ zur zu greifenden Last eingeblendet wird.
